# EUROPÄISCHE PATENTSCHRIFT

(11) **EP 1 180 258 B1**
(45) Veröffentlichungstag und Bekanntmachung des Hinweises auf die Patenterteilung: **16.04.2003**
(21) Anmeldenummer: 00943623.9
(22) Anmeldetag: 23.05.2000
(51) Int. Cl.: G06K 9/68, G06T 7/00

(54) **MUSTERERKENNUNG MITTELS PRÜFUNG ZUSÄTZLICHER MERKMALE NACH TEILVERARBEITUNG**
PATTERN RECOGNITION BY MEANS OF AN EXAMINATION OF SUPPLEMENTARY FEATURES AFTER A PARTIAL PROCESSING
RECONNAISSANCE DE FORMES PAR EXAMEN DE CARACTERISTIQUES COMPLEMENTAIRES APRES TRAITEMENT PARTIEL

(30) Priorität: 26.05.1999 DE 19924010
(43) Veröffentlichungstag der Anmeldung: 20.02.2002
(73) Patentinhaber: SIEMENS AKTIENGESELLSCHAFT, 80333 München (DE)
(72) Erfinder: DECO, Gustavo, D-85579 Neubiberg (DE); SCHÜRMANN, Bernd, D-85778 Haimhausen (DE)
(86) Internationale Anmeldenummer: DE0001648
(87) Internationale Veröffentlichungsnummer: WO00073980

(56) Entgegenhaltungen:
- US-A- 5 830 141
- RIVES G ET AL: "Prediction-verification, hypothesis accumulation for scene analysis by object identification" COMPUTER VISION FOR ROBOTS, CANNES, FRANCE, 2-6 DEC. 1985, Bd. 595, Seiten 300-305, XP000952044 Proceedings of the SPIE - The International Society for Optical Engineering, 1986, USA ISSN: 0277-786X
- YUN-SHU P CHIOU ET AL: "APPLICATION OF NEURAL NETWORK BASED HYBRID SYSTEM FOR LUNG NODULE DETECTION" PROCEEDINGS OF THE ANNUAL SYMPOSIUM ON COMPUTER BASED MEDICAL SYSTEMS,US,LOS ALAMITOS, IEEE COMP. SOC. PRESS, Bd. SYMP. 6, 13. Juni 1993 (1993-06-13), Seiten 211-216, XP000416013
- YUNCAI LIU ET AL: "DETERMINING STRAIGHT LINE CORRESPONDENCES FROM INTENSITY IMAGES" PATTERN RECOGNITION,US,PERGAMON PRESS INC. ELMSFORD, N.Y, Bd. 24, Nr. 6, 1991, Seiten 489-504, XP000214975 ISSN: 0031-3203
- PARVIN B ET AL: "A LAYERED NETWORK FOR THE CORRESPONDENCE OF 3D OBJECTS" PROCEEDINGS OF THE INTERNATIONAL CONFERENCE ON ROBOTICS AND AUTOMATION,US,LOS ALAMITOS, IEEE COMP. SOC. PRESS, Bd. CONF. 7, 9. April 1991 (1991-04-09), Seiten 1808-1813, XP000221143 ISBN: 0-8186-2163-X

## Beschreibung

Die vorliegende Erfindung bezieht sich auf ein Lernverfahren für ein Mustererkennungssystem, auf ein Verfahren zur Wiedererkennung wenigstens eines Musters, auf ein Musterkennungssystem sowie auf eine Verwendung eines solchen Mustererkennungssystems.

Die Erfindung betrifft allgemein das Gebiet der Mustererkennung. Mustererkennung bedeutet dabei, daß vorbestimmte, wiederzuerkennende Muster einem technischen System vorab zugeführt werden oder mit anderen Worten das Mustererkennungssystem angelernt oder trainiert wird. Das Mustererkennungssystem soll diese vorab angelernten Muster später wiedererkennen.

Unter "Muster" ist dabei im Sinne der vorliegenden Erfindung jede zwei- oder mehrdimensionale Darstellung sensorischer Eindrücke zu verstehen. Muster im Sinne der vorliegenden Erfindung können somit natürlich Abbildungen körperlicher Gegenstände sein. Weitere sensorische Eindrücke können beispielsweise Geruch oder Tonsignale sein. Bei Tonsignalen kann die zweidimensionale Darstellung beispielsweise ein Frequenzspektrum oder der Amplitudenverlauf abhängig von der Zeit sein.

Konkrete Anwendungen für eine Mustererkennung gibt es natürlich viele. Als Beispiel soll einerseits die Robotik genannt werden, wobei in diesem Fall das Mustererkennungssystem dazu dient, daß der Roboter vorbestimmte Gegenstände (die in diesem Fall die trainierten Muster darstellen) beispielsweise von einem Fließband oder dergleichen aufgreift.

Eine weiter Anwendungsmöglichkeit stellt allgemein die Medizintechnik dar. Beispielsweise können durch das Mustererkennungssystem Tumorerkrankungen auf Abbildungen von medizinischen bildgebenden Systemen erkannt werden, wenn typische Krankheitsbilder von Tumoren als Muster dem Mustererkennungssystem antrainiert wurden.

Eine weitere Anwendungsmöglichkeit stellt die Erkennung von Schriftzeichen dar. Aus "Lu et al. Hierarchical Attributed Graph Representation and Recognition of Handwritten Chinese Characters, Pattern Recognition, Bd.24, Nr.7, Seiten 617 bis 632, Pergamon Press plc, 1991" und "Cheng et al., Recognition of Handprinted Chinese Characters via Stroke Relaxation, Pattern Recognition, Bd.26, Nr.4, Seiten 579 bis 593, Pergamon Press plc, 1993" sind die Erkennung von Chinesischen Schriftzeichen, die jeweils dargestellt werden durch elementare Linien oder Striche und deren relative Positionen zueinander, bekannt.

Bei einer Anwendung auf akustische Signale kann ein Mustererkennungssystem bspw. trainierte Töne in einem verrauschten Spektrum erkennen.

Ein wesentlicher Punkt hinsichtlich der technischen Implementierung eines Mustererkennungssystems ist die Art und Weise, wie dem Mustererkennungssystem die Informationen zugeführt werden, die in dem Muster wiedergegeben sind. Aus dem Stand der Technik ist es dabei bekannt, derartige technische Systeme durch einen sogenannten "Feed-Forward"-Ansatz zu implementieren, wie er beispielsweise dargelegt ist in Marr(1982) "Vision: A Computational Investigation into the human Representation and Processing of visual Information", New York, Freeman. "Feed-Forward" bedeutet dabei im wesentlichen, daß insbesondere in der Erkennungsphase einer Musterkennung nur Information des zu erkennenden Muster verarbeitet wird. Es hat sich indessen herausgestellt, daß dieser "Feed-Forward"-Ansatz dahingehend bei der technischen Implementierung unzureichend ist, daß die resultierenden Verarbeitungsgeschwindigkeiten zu niedrig sind.

Es ist daher Aufgabe der vorliegenden Erfindung, eine Technik zur Mustererkennung bereitzustellen, die eine effizientere technische Realisierung ermöglicht.

Diese Aufgabe wird durch die Merkmale der unabhängigen Ansprüche gelöst. Die abhängigen Ansprüche bilden den zentralen Gedanken der vorliegenden Erfindung in besonders vorteilhafter Weise weiter.

Gemäß einem ersten Aspekt ist ein Lernverfahren für ein Mustererkennungssystem vorgesehen. Dabei wird wenigstens ein zu erkennendes Muster vorgegeben, daß heißt dem Mustererkennungssystem werden die Informationen (Daten) des Musters, daß heißt der zweidimensionalen Darstellung sensorischer Eindrükke zugeführt. Dann werden Daten, die jeweils Bereiche des vorgegebenen Musters wiedergeben, erfaßt. Vorteilhafterweise werden dabei solche Bereiche ausgewählt, die besonders aussagekräftig sind. Bei einer zweidimensionalen Abbildung sind dies üblicherweise Bereiche, die einen hohen Kontrast wie beispielsweise auffallende Sprünge der Luminanz- oder Farbinformation aufweisen. Weiterhin werden die relativen räumlichen Beziehungen wenigstens zweier durch die Daten wiedergegebener Bereiche erfaßt. Bei einem Frequenzspektrum kann dies beispielsweise der Abstand zweier Bereiche sein. Bei einer zweidimensionalen Abbildung ist dies üblicherweise die Relativposition der entsprechenden Bereiche. Die Erfassung der räumlichen Beziehungen der Bereiche untereinander erfolgt getrennt von der Erfassung der eigentlichen Daten der entsprechenden Bereiche. Die Daten, die die Bereiche des vorgegebenen Musters wiedergeben sowie die räumlichen Beziehungen der Bereiche untereinander werden dann abgespeichert.

Die Erfassung und Abspeicherung der Daten, die die Bereiche des vorgegebenen Musters wiedergeben, sowie die Erfassung und Abspeicherung der räumlichen Beziehungen der Bereiche kann dabei seriell erfolgen.

Das Muster kann eine Abbildung eines körperlichen Gegenstands sein. Diese körperlichen Gegenstände können beispielsweise Gegenstände sein, die von einem Roboter gehandhabt werden sollen.

Das wenigstens eine vorgegebene Muster kann auch eine durch ein bildgebendes System erzeugte Abbildung eines Krankheitsbildes, wie beispielsweise eines Tumors sein.

Gemäß der Erfindung ist weiterhin ein Verfahren zur Wiedererkennung wenigstens eines Musters vorgesehen. Daten, die das wenigstens eine wiederzuerkennende Muster kennzeichnen werden dabei vorab abgespeichert. Dies kann insbesondere nach einem Verfahren wie oben ausgeführt erfolgen. Bei der eigentlichen Wiedererkennung werden dann Daten von wenigstens einem Bereich eines zu erkennenden Musters erfaßt. Dann wird eine sogenannte Hypothese basierend auf den vorab abgespeicherten Daten und den erfaßten Daten des wenigstens einen Bereichs des zu erkennenden Musters erzeugt. Die Hypothese gibt dabei an, welchem durch die abgespeicherten Daten gekennzeichneten Muster das zu erkennende Muster vermutlich entspricht. Es werden Daten wenigstens eines weiteren Bereichs des zu erkennenden Musters erfaßt und mit den abgespeicherten Daten verglichen, die den entsprechenden Bereich des vermuteten Musters kennzeichnen. Wenn die Daten des wenigstens eines weiteren Bereichs des zu erkennenden Musters im wesentlichen mit den abgespeicherten Daten übereinstimmen, die den entsprechenden Bereich des vermuteten Musters kennzeichnen, gilt das zu erkennende Muster als das vermutete Muster identifiziert und somit wiedererkannt. "Im wesentlichen übereinstimmen" bedeutet dabei, daß bei einer technischen Realisierung ein gewisser Identitäts-Schwellenwert (bspw. ein vorbestimmter Prozentsatz an Übereinstimmung) vorgegeben wird, bei dessen Überschreitung die entsprechenden Daten als übereinstimmend angenommen werden.

Die Hypothese kann beispielsweise durch ein künstliches neuronales Netz erzeugt werden.

Das Verfahren zur Wiedererkennung kann besonders effektiv technisch ausgeführt werden, wenn der wenigstens eine weitere Bereich, der der Verifizierung der Hypothese dient, auf Grundlage der Hypothese ausgewählt wird. Die Hypothese kann also dahingehend analysiert werden, wo ein weiterer Bereich des zu erkennenden Musters vorzuliegen hat, wenn es sich dabei wirklich um das vermutete Muster handelt.

Für den Fall, daß die Daten des wenigstens eines weiteren Bereichs des zu erkennenden Musters nicht im wesentlichen mit den abgespeicherten Daten übereinstimmen (und somit die Hypothese sich als falsch herausstellt, daß heißt das vermutete Muster nicht dem zu erkennenden entspricht) wird eine weitere Hypothese erzeugt und wie oben bereits ausgeführt anhand eines noch weiteren Bereichs verifiziert.

Gemäß der vorliegenden Erfindung ist weiterhin ein Mustererkennungssystem vorgesehen. Dies weist einen Speicher auf, in dem Daten abgelegt sind, die wenigstens ein wiederzuerkennendes des Muster kennzeichnen. Weiterhin sind Mittel zur Erfassung der Daten wenigstens eines Bereichs eines zu erkennendes Musters vorgesehen. Mittel zur Erzeugung einer Hypothese basierend auf den Daten im Speicher und basierend auf den erfaßten Daten des wenigstens einen Bereichs des zu erkennenden Musters sind vorgesehen, wobei die erzeugte Hypothese ein vermutetes Muster aus den Mustern angibt, die durch die vorab abgespeicherten Daten gekennzeichnet werden. Die Mittel zur Erfassung sind dahingehend ausgebildet, daß die Daten wenigstens eines weiteren Bereichs des zu erkennenden Musters erfaßt und mit den Daten im Speicher verglichen werden, die den entsprechenden Bereich des vermuteten Musters kennzeichnen. Das vermutete Muster gilt als wiedererkannt (identifiziert), wenn die Daten des wenigstens einen weiteren Bereichs des zu erkennenden Musters im wesentlichen mit denjenigen Daten im Speicher übereinstimmen, die den entsprechenden Bereich des vermuteten Musters kennzeichnen.

Die Mittel zur Erzeugung der Hypothese können insbesondere ein künstliches neuronales Netz sein.

Das System kann einen Analysator aufweisen, der den wenigstens einen weiteren Bereich des zu erkennenden Musters abhängig von der erzeugten Hypothese auswählt. Bei diesem Analysator handelt es sich somit im Gegensatz zu dem Feed-Forward-Ansatz des Standes der Technik (siehe oben) um einen Analysator, der gemäß einer Top-Down-Technik arbeitet. Top-Down bedeutet dabei, daß bereits vorliegende, bspw. vorab abgespeicherte Informationen bspw. in der Erkennungsphase mit einbezogen werden.

Das wie oben angeführt ausgebildete System kann insbesondere zur Erkennung von durch einen Roboter handzuhabenden Gegenständen verwendet werden. Weiterhin kann es zur Erkennung typischer Krankheitsbilder verwendet werden.

Der technische Vorteil der dargestellten Technik ist insbesondere, daß die Erfassung in der Lern- und/oder Erkennungsphase seriell erfolgen kann. Diese serielle Erfassung benötigt im Gegensatz zu einer parallelen Gesamterfassung der Informationen eines zu lernenden oder zu erkennenden Musters weniger Rechenkapazität und ist mit klassischen seriellen Rechenarchitekturen gut zu realisieren.

Nunmehr werden weitere Eigenschaften, Vorteile und Merkmale der vorliegenden Erfindung bezugnehmend auf ein Ausführungsbeispiel und die Figuren der anliegenden Zeichnungen näher erläutert.
Figur 1 zeigt ein erfindungsgemäßes System zur Erkennung von Objekten auf der Basis von neurokognitiven Erkenntnissen, und
Figur 2 zeigt ein Ablaufschema zur Erkennung von Objekten.

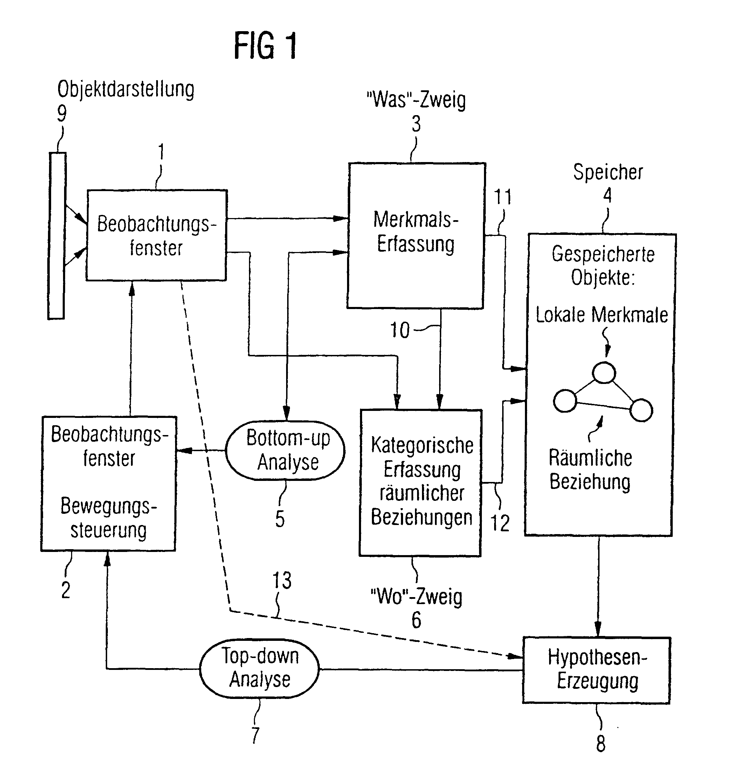

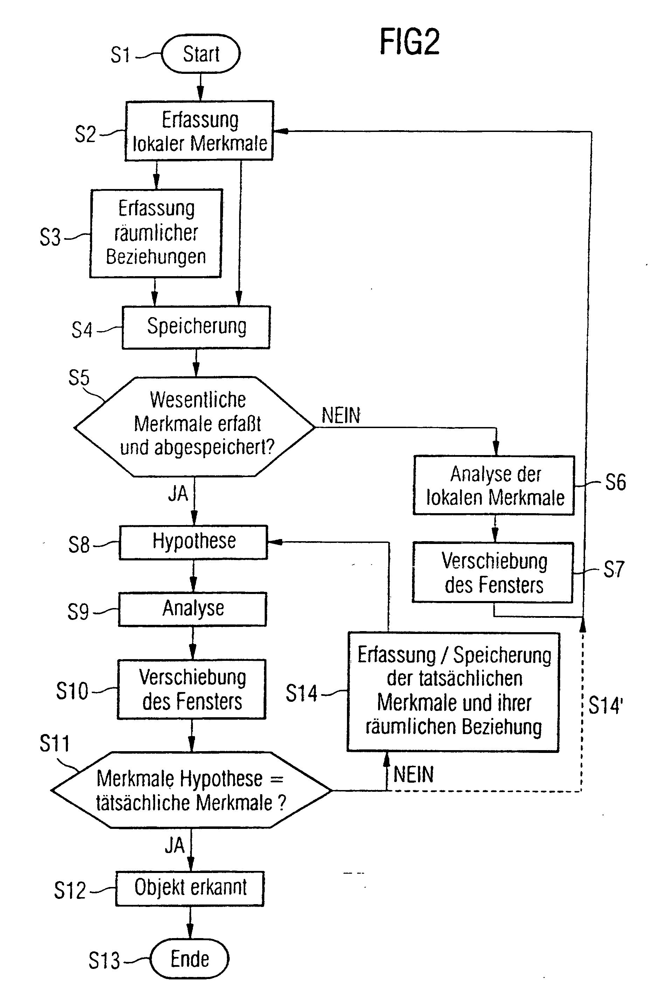

Zuerst sollen bezugnehmend auf Figur 1 die Bauteile eines erfindungsgemäßen Systems zur Erkennung von Mustern erläutert werden. Ein Ablaufschema, daß das gesteuerte Zusammenwirken dieser Bauteile erläutert, wird darauf folgend bezugnehmend auf Figur 2 erläutert werden.

Es wird darauf hingewiesen, daß gemäß den Ausführungsbeispielen die Erkennung visuell erfolgt, aber die Erfindung ebenso auf Grundlage anderer sensorischer Erfassungen, wie beispielsweise akustischer Erfassungen ausgeführt werden kann.

Mit dem Bezugszeichen 9 sind dabei in der Figur 1 Mittel zur vollständigen Darstellung eines zu erkennenden Musters (Objekts) bezeichnet. Diese Mittel können beispielsweise ein Flächen-Bildsensor 9 sein. Mit dem Bezugszeichen 1 sind in der Figur Mittel bezeichnet, die ein Beobachtungsfenster suchscheinwerferartig über die gesamte Oberfläche des Flächen-Bildsensors 9 verschieben können. Diese Mittel können beispielsweise Mittel zur selektiven Auslesung von vorbestimmten Ausschnitten des Flächen-Bildsensors 9 sein. Ausgangssignale des Beobachtungsfensters 1, die also die visuellen Merkmale des gerade im Fenster liegenden Bereichs oder Ausschnitts der Objektdarstellung durch den Flächen-Bildsensor 9 wiedergeben, werden gemäß der vorliegenden Erfindung einerseits zu einem sogenannten "Was"-Zweig 3 gegeben und andererseits zu einem sogenannten "Wo"-Zweig 6. Der "Was"-Zweig 3 ist dabei für die Erfassung lokaler Merkmale, wie beispielsweise Kanten, Strukturen oder Farben des entsprechenden Ausschnitts des Objekts 9 zuständig, wohingegen der "Wo"-Zweig 6 zur kategorischen Erfassung räumlicher Beziehungen der entsprechenden lokalen Merkmale, wie oben angeführt, zuständig ist. Dazu ist der "Wo"-Zweig mit dem "Was"-Zweig durch eine Leitung 10 verbunden, mittels der dem "Wo"-Zweig 6 die entsprechenden erfaßten lokalen Merkmale des "Was"-Zweigs 3 zugeführt werden.

Der "Was"-Zweig 3 sowie der "Wo"-Zweig 6 sind jeweils über eine Leitung 11 bzw. 12 mit einem Speicher 4 verbunden, der ein assoziativer Grafikspeicher ist. In dem Speicher 4 werden grafisch die lokalen Merkmale sowie deren räumliche Beziehung abgespeichert. Dies erfolgt dabei hinsichtlich mehrerer Objekte während einer Trainingsphase des Systems. Erst nach Abschluß der Trainingsphase wird dann in der eigentlichen Anwendungsphase des Systems eine Auswertung des Inhalts des Speichers 4 unternommen.

Die Verschiebung des Beobachtungsfensters 1 wird durch eine Beobachtungsfenster-Bewegungssteuerung 2 (Beobachtungsfenster-Controller) angesteuert. Die Beobachtungsfenster-Bewegungssteuerung 2 führt diese Bewegungssteuerung abhängig von zwei zugeführten Analysesignalen aus, nämlich ein Analysesignal von einem Bottom-Up-Analysator 5 sowie ein zweites Analysesignal von einem Top-Down-Analysator 7.

Der Bottom-Up-Analysator 5 analysiert die erfaßten lokalen Merkmale des "Was"-Zweigs 3. Im Gegensatz dazu greift der Top-Down-Analysator 7 auf einen Hypothese-Generator 8 zurück, der wiederum mit dem Speicher 4 verbunden ist und die in dem Speicher 4 während der Trainingsphase abgelegten Ergebnisse zur Erzeugung einer Hypothese benutzt.

Das in der Figur 1 dargestellte System ist somit einerseits zur Ausführung niederer Funktionen fähig, nämlich mittels des Bottom-Up-Analysators 5, der direkt die erfaßten Merkmale des erfaßten "Was"-Zweigs 3 auswertet und nicht auf den Speicher 4 zurückgreifen kann. Der Bottom-Up-Analysator 5 verwertet somit allein Sensor-Eingangssignale.

Das dargestellte System kann darüber hinaus höherwertige Funktionen mittels des Top-Down-Analysators 7 sowie des Hypothesen-Generators 8 ausführen. Der Top-Down-Analysator 7 und der Hypothesen-Generator 8 sind nämlich mit dem Speicher 4 verbunden, so daß sie auf Zufuhr abgespeicherte Erkenntnisse aus einer Trainingsphase des Systems zurückgreifen können.

Das dargestellte System löst das bei der visuellen Erkennung von Objekten inhärente Problem begrenzter Speicherressourcen dadurch, daß ein Fenstermechanismus 1 zur Verringerung der eingehenden visuellen Informationen vorgesehen wird, wodurch die begrenzten informationstechnischen Ressourcen des Systems (Ressourcen der entsprechenden Prozessoren) nicht überschritten werden. Nur die Information innerhalb des Beobachtungsfensters wird einer weitergehenden Verarbeitung auf einer höheren Ebene unterzogen.

Das in der Figur dargestellte System weist den "Was"-Erfassungszweig 3 sowie den "Wo"-Erfassungszweig 6 auf, so daß Objekteigenschaften bzw. räumliche Eigenschaften in getrennten Zweigen verarbeitet werden können. Die Objekteigenschaften beinhalten Form, Farben sowie Struktur des zu erkennenden Objekts.

Der "Wo"-Erfassungszweig 6 zur kategorischen Erfassung räumlicher Beziehungen erfaßt beispielsweise Positionen, Größe und dergleichen der durch den "Was"-Erfassungszweig 3 erfaßten lokalen Merkmale. Während somit der "Was"-Erfassungszweig 3 zur Gewinnung primärer Eigenschaften des Ausschnitts des Beobachtungsfensters 1 zuständig ist, dient der "Wo"-Erfassungszweig 6 zur Bestimmung kategorischer räumlicher Beziehungen (links, rechts, etc.) zwischen zwei Gruppen an lokalen Merkmalen, die verschiedenen Positionen in dem Beobachtungsfenster zugeordnet sind. Diese beiden Typen an Informationen (lokale Merkmale bzw. räumliche Beziehungen zwischen ihnen) werden während einer Lernphase in einem assoziativen Speicher grafisch abgelegt. Die Knoten dieser Grafik speichern jeweils den Satz lokaler Merkmale, der durch den "Was"-Erfassungszweig 3 an verschiedenen, durch das Beobachtungsfenster 1 rasterartig abgefahrenen Positionen erfaßt wurde, und die in der Figur dargestellten Kantenlinien speichern ka-tegorisch die räumliche Beziehung zwischen zwei Knoten, die durch den "Was"-Erfassungszweig 3 erfaßt wurden. Während der Lernphase vor der eigentlichen Anwendungsphase erfolgt nur eine Analyse durch den Bottum-Up-Analysator 5, so daß nur sensorische Information verwendet wird und die meisten interessanten Bereiche des Objekts, wie beispielsweise hervorspringende Kanten, abgefahren und analysiert werden. Dadurch wird eine invariante Wiedergabe eines Objekts als ein Speichersatz in dem Speicher 4 abgelegt, wobei der Speichersatz durch die lokalen Merkmale (lokale Kanten) sowie die entsprechenden räumlichen Beziehungen festgelegt ist.

Das in der Figur dargestellte System ermöglicht darüber hinaus eine sogenannte Top-Down-Analyse durch den Top-Down-Analysator 7. Der Top-Down-Analysator 7 dient dabei zur Verschiebung des Beobachtungsfensters auf Grundlage iterativer Tests und Hypothesen, die durch den Hypothesen-Generator 8 auf Grundlage der in dem Speicher 4 abgelegten Erkenntnisse erfolgt. Mit anderen Worten, während der eigentlichen Erkennungsphase oder Anwendungsphase wird nicht nur eine Bottom-Up-Analyse durch den Bottom-Up-Analysator 5 auf Grundlage sensorischer Information für die Verschiebung des Beobachtungsfensters 1 verwendet, sondern vielmehr wird auf Grundlage der in dem Speicher 4 abgelegten Kenntnisse das Beobachtungsfenster 1 zu Bereichen der Objektdarstellung 9 verschoben, in denen der Hypothesen-Generator 8 vorbestimmte lokale Merkmale erwartet. In dieser Weise werden Hypothesen, die der Hypothesen-Generator 8 erzeugt, iterativ bestätigt oder verworfen. Diese Analyse-Syntheseschleife wird ausgeführt, bis eine Hypothese, die der Hypothesen-Generator 8 erzeugt hat und der Top-Down-Analysator 7 zur Bewegung des Beobachtungsfensters 1 analysiert hat, erfolgreich bestätigt wird, was bedeutet, daß das Objekt insgesamt erkannt wurde.

Durch die Schaffung der verschiedenen dargestellten und oben genannten Subsysteme des erfindungsgemäßen Systems wird die begrenzte Kapazität der zu Implementierung verwendeten Speicher, Prozessoren und dergleichen nicht überfordert. Die benötigte Kapazität (Ressourcen) wird weiterhin erfindungsgemäß durch das suchscheinwerferartige Beobachtungsfenster 1 verringert, das rasterartig das Objekt abfahren kann. Das "Was"-Subsystem analysiert die primären lokalen Merkmale des Ausschnitts des Objekts im Beobachtungsfenster 1, während die räumliche Beziehung zwischen diesen lokalen Merkmalen durch das "Wo"-Subsystem erfaßt und analysiert werden kann. Die Erkenntnisse dieser beiden Subsysteme werden in dem Speicher 4 abgelegt. Dann kann Top-Down-artig eine Hypothese online erzeugt werden. Auf Grundlage dieser Hypothese erfolgt dann iterativ die nächste Bewegung (Verschiebung) des Beobachtungsfensters 1. Wenn die Merkmale, die nach der Verschiebung des Beobachtungsfensters 1 erkannt werden, mit den zu erwartenden Merkmalen der durch den Hypothesen-Generator 8 erzeugten Hypothese übereinstimmen, bedeutet dies, daß das Objekt tatsächlich erkannt wurde. Durch diesen iterativen Vorgang unter Auswertung der abgelegten Erkenntnisse in dem Speicher 4 wird das Beobachtungsfenster 1 zum Einholen (Auslesen) weiterer Information verschoben, um zu überprüfen, ob das Objekt wirklich erkannt wurde, oder mit anderen Worten, ob die durch die Hypothese angenommenen Merkmale mit den tatsächlichen Merkmalen des Objekts übereinstimmen. Das dargestellte System stellt somit ein aktives visuelles System zur Objekterkennung dar.

Bezugnehmend auf Figur 2 soll nunmehr das Zusammenwirken der Bauteile des Systems von Figur 1 näher erläutert werden. Dabei werden im wesentlichen zwei Phasen ausgeführt:
1.) die Lern- oder Trainingsphase, in der alle wesentlichen Bereiche eines zu erkennenden Musters durch das Beobachtungsfenster abgefahren werden und abgespeichert werden,
2.) die eigentliche Erkennungsphase, in der auf Basis der in der Trainingsphase abgespeicherten Erkenntnisse Hypothesen erstellt und verifiziert werde. Wenn eine Hypothese bestätigt wird ( vermutete Merkmale gemäß Hypothese im wesentlichen gleich tatsächliche Merkmale des Objekts), wurde das Muster korrekt erkannt.

Die einzelnen Schritte sollen nunmehr im Detail beschrieben werden:

Zuerst erfolgt in Schritt S1 der Start des Ablaufs. In Schritt S2 wird der Bereich des Musters erfaßt, der gerade im Ausschnitt (Erfassungsbereich) des Beobachtungsfensters liegen. In Schritt S3 werden auf der Basis der Ergebnisse des Schrittes S2 räumliche Beziehungen der Bereiche erfaßt. In Schritt S4 werden die Daten der Bereiche und deren räumlichen Beziehungen abgespeichert. In Schritt S5 wird an Hand des Speicherinhalts geprüft, ob ausreichend aussagekräftige und somit alle wesentlichen Bereiche des Musters erfaßt und gespeichert wurden. Für den Fall, daß die Prüfung von Schritt S5 negativ ist, werden in Schritt S6 die lokalen Merkmale Bottom-up-analysiert. In Schritt S7 wird das Beobachtungsfenster abhängig von dem Ergebnis der Analyse in Schritt S6 verschoben und die Verarbeitung geht zu Schritt S2 zurück. Die Schritte S2 bis S7 stellen somit die die Lern- oder Trainingsphase dar, in der alle wesentlichen Bereiche eines vorgegebenen zu erkennenden Musters durch das Beobachtungsfenster abgefahren, erfaßt und abgespeichert werden. Die Schritte S2 bis S7 werden dabei so lange wiederholt, bis die wesentlichen Bereiche des Musters und ihre räumlichen Beziehungen erfaßt und gespeichert wurden.

Falls die Prüfung in Schritt S5 positiv verläuft, wird auf der Basis des Speicherinhalts in Schritt S8 eine Hypothese erstellt, die vermutete Daten in bisher noch nicht angefahrenen/erfaßten Bereichen des Musters angibt. Die Hypothese wird in Schritt S9 analysiert (Top-Down-Analyse) und in Schritt S10 das Beobachtungsfenster abhängig von dem Ergebnis der Analyse verschoben. In Schritt S11 erfolgt eine Prüfung, ob in dem neu angefahrenen und erfaßten Bereich die erfaßten Daten gemäß der Hypothese mit den tatsächlichen Daten des Musters in diesem Bereich übereinstimmen. Falls die Prüfung negativ ist und die aktuelle Hypothese somit verworfen ist, was bedeutet, daß das Muster nicht erkannt wurde, werden die tatsächlichen Daten der Bereiche und ihre räumlichen Beziehungen in schritt S14 erfaßt und abgespeichert und die Verarbeitung geht zu Schritt S8 zurück.

Alternativ kann bspw. bei allzu großen Abweichungen zwischen den vermuteten Daten des weiteren Bereichs gemäß der Hypothese und den tatsächlichen Daten des Musters die Erkennungsphase abgebrochen werden und die Lern- oder Trainingsphase (Schritte S2 bis S7) wieder aufgenommen werden.

Wenn in Schritt S11 in dem neu angefahrenen und erfaßten Bereich die vermuteten Daten gemäß der Hypothese mit den tatsächlichen Daten des Musters in diesem Bereich übereinstimmen, bedeutet dies, daß die Hypothese bestätigt wurde und das Muster somit erkannt wurde. Der Ablauf kann daher in einem Schritt S13 beendet werden.

Die Schritte S8 bis S14 stellen somit die eigentliche Erkennungsphase dar, in der auf Basis der in der Trainingsphase abgespeicherten Erkenntnisse Hypothesen erstellt und verifiziert werden.

Zusammenfassend wird also in der Lern- oder Trainingsphase ein später zu erkennendes Muster, daß heißt eine zwei- oder mehrdimensionale Darstellung sensorischer Eindrücke vorgegeben. Dieses Muster wird sequentiell erfaßt, daß heißt, es werden automatisch Daten aussagekräftiger Merkmale (Kanten, Vorsprünge etc. im Falle einer zweidimensionalen Abbildung) einerseits erfaßt und darüber hinaus auch die räumliche Beziehung zwischen diesen Bereichen abgespeichert. Bereiche, die bereits erfaßt (besucht) wurden, werden während der Lernphase nie wieder neu erfaßt. Die Lernphase läuft bei einem vorgegebenen Muster so lange, bis sämtliche "interessanten" Bereiche des zu erfassenden und lernenden Musters abgefahren sind.

In der Erkennungsphase sollen in der Lernphase abgespeicherte Muster wiedererkannt werden, was bedeutet, daß die Muster auch dann wiedererkannt werden sollen, wenn sie innerhalb gewisser Grenzen gegenüber dem ursprünglich gelernten Muster abgeändert sind (Drehung, Deformation, Verrauschung, ...). In der Erkennungsphase wird zuerst ein markanter, aussagekräftiger Bereich des zu erkennenden Musters analysiert. Ausgehend von dieser Erstinformation wird durch einen Abgleich mit den abgespeicherten Mustern eine erste Hypothese erzeugt. Diese Hypothese stellt somit ein vermutetes Muster dar. Dementsprechend wird auf Grundlage der Hypothese das Aufmerksamkeitsfenster dorthin verschoben, wo gemäß der Hypothese weitere markante Bereiche vorliegen sollen. Die Hypothese kann sich im Verlauf einer Erkennungsphase mehrmals ändern, da erfaßte Bereiche laufend weiterverarbeitet werden und dem Speicher 4 zugeführt werden. Die Größe des Aufmerksamkeitsfensters kann, muß aber nicht verändert werden.

Für den Fall, daß eine Hypothese sich im Verlauf der Lernphase als falsch herausstellt (die entsprechenden Daten des Bereichs stimmen nicht mit den abgespeicherten Daten des entsprechenden Bereichs des vermuteten Musters überein) wird die aktuelle Hypothese verworfen und die nächstbeste Hypothese verifiziert. Da in der Erkennungsphase unmittelbar nach der Erfassung der Daten eines ersten Bereichs des zu erkennenden Musters eine Hypothese erstellt wird, und genauer gesagt eine Rangliste von möglichen Hypothesen erstellt wird, kann die zuerst erzeugte Hypothese natürlich völlig unzutreffend sein.

Der technische Vorteil der dargestellten Technik ist insbesondere, daß die Erfassung in der Lern- und/oder Erkennungsphase seriell erfolgen kann. Diese serielle Erfassung benötigt im Gegensatz zu einer parallelen Gesamterfassung der Informationen eines zu lernenden oder zu erkennenden Musters weniger Rechenkapazität und ist mit klassischen seriellen Rechenarchitekturen gut zu realisieren.

## Patentansprüche

1. Computergestütztes Mustererkennungssystem zur Ermittlung einer Übereinstimmung eines Erkennungsbereichs eines zu erkennenden Musters mit einem Referenzbereich eines Referenzmusters,
- mit einem Speichermittel, in dem vorgegebene Referenzbereiche eines vorgegebenen Referenzmusters und vorgegebene relative räumliche Referenzbeziehungen, die jeweils relative räumliche Lagen zwischen zwei von den vorgegeben Referenzbereichen beschreiben, gespeichert sind,
- mit einem Auswahlmittel, mit dem ein erster Erkennungsbereich aus einem zu erkennenden Muster auswählbar ist,
- mit einem Vergleichsmittel, mit dem ein erster Referenzbereich aus den Referenzbereichen des Referenzmusters durch Vergleich des ersten Erkennungsbereichs mit den vorgegebenen Referenzbereichen auswählbar ist,
- mit einem ersten Auswahlmittel, mit dem ein zweiter Referenzbereich aus den Referenzbereichen unter Verwendung des ersten Referenzbereichs und einer von den relativen räumlichen Referenzbeziehungen, welche die relative Lage des ersten Referenzbereichs zu dem zweiten Referenzbereich beschreibt, auswählbar ist,
- mit einem zweiten Auswahlmittel, mit dem ein zweiter Erkennungsbereich aus dem zu erkennenden Muster unter Verwendung des ersten Erkennungsbereichs und der einen relativen räumlichen Referenzbeziehung, welche die relative Lage des ersten Referenzbereichs zu dem zweiten Referenzbereich beschreibt, auswählbar ist,
- mit einem Erkennungsmittel, mit dem eine Übereinstimmung des zweiten Erkennungsbereichs mit dem zweiten ausgewählten Referenzbereich ermittelbar ist.

2. Mustererkennungssystem nach Anspruch 1,
- bei dem das zu erkennende Muster als das vorgegebene Referenzmuster erkannt wird, falls die Übereinstimmung eine vorgebbare Schwelle überschreitet, andernfalls das zu erkennende Muster nicht als das Referenzmuster erkannt wird.

3. Computergestützte Ermittlung einer Übereinstimmung zwischen einem Referenzbereich aus einem Referenzmuster und einem Erkennungsbereich aus einem zu erkennenden Muster, wobei von dem Referenzmuster Referenzbereiche und relative räumliche Referenzbeziehungen, die jeweils relative räumliche Lagen zwischen den Referenzbereichen beschreiben, vorgegeben sind, aufweisend die folgenden Schritte:
- Auswahl eines ersten Erkennungsbereichs aus dem zu erkennenden Muster,
- Ermittlung eines ersten Referenzbereichs aus den Referenzbereichen durch Vergleich des ersten Erkennungsbereichs mit den vorgegebenen Referenzbereichen,
- Ermittlung eines zweiten Referenzbereichs aus den Referenzbereichen unter Verwendung des ersten Referenzbereichs und einer von den relativen räumlichen Referenzbeziehungen, welche die relative Lage des ersten Referenzbereichs zu dem zweiten Referenzbereich beschreibt,
- Ermittlung eines zweiten Erkennungsbereichs aus dem zu erkennenden Muster unter Verwendung des ersten Erkennungsbereichs und der einen relativen räumlichen Referenzbeziehung, welche die relative Lage des ersten Referenzbereichs zu dem zweiten Referenzbereich beschreibt,
- Ermittlung der Übereinstimmung des zweiten Erkennungsbereichs mit dem zweiten ausgewählten Referenzbereich.

4. Verfahren nach Anspruch 3,
eingesetzt zur Mustererkennung derart, dass das zu erkennende Muster als das Referenzmuster erkannt wird, wenn ein erstes vorgegebenes Maß an Übereinstimmung erreicht wird, und andernfalls das zu erkennende Muster nicht als das Referenzmuster erkannt wird.

5. Verfahren nach Anspruch 4,
bei dem bei Nicht-Erkennung ein weiterer zweiter Referenzbereich unter Verwendung des ersten Referenzbereichs und einer weiteren von den relativen räumlichen Referenzbeziehungen, welche die relative Lage des ersten Referenzbereichs zu dem weiteren zweiten Referenzbereich beschreibt,
ermittelt und mit diesem weiteren zweiten Referenzbereich das Verfahren nach Anspruch 4 durchgeführt wird.

6. Verfahren nach Anspruch 4,
bei dem das Verfahren nach Anspruch 5 iterativ solange durchgeführt wird bis das zu erkennende Muster als das Referenzmuster erkannt wird oder ein zweites vorgegebenes Maß an Übereinstimmung unterschritten wird.

7. Verfahren nach einem der Ansprüche 3 bis 6,
bei dem der zweite Referenzbereich als eine Hypothese für einen vermuteten zweiten Erkennungsbereich formuliert wird, welche durch die Übereinstimmung verifiziert oder verworfen wird.

8. Verfahren nach Anspruch 7,
beim dem die Hypothese unter Verwendung eines künstlichen neuronalen Netzes (8) erzeugt wird.

9. Verfahren nach einem der Ansprüche 3 bis 8,
bei dem das zu erkennende Muster einen von einem Roboter handzuhabenden Gegenstand beschreibt.

10. Verfahren nach einem der Ansprüche 3 bis 8,
bei dem das zu erkennende Muster ein durch ein bildgebendes System erzeugtes Abbild eines Krankheitsbild ist.

## Claims

1. Computer-aided pattern recognition system for determining a matching of a recognition area of a pattern to be recognized with a reference area of a reference pattern.
- having a storage means in which there are stored prescribed reference areas of a prescribed reference pattern and prescribed relative spatial reference relationships which respectively describe relative spatial positions between two of the prescribed reference areas,
- having a selecting means with the aid of which a first recognition area can be selected from a pattern to be recognized,
- having a comparing means with the aid of which a first reference area can be selected from the reference areas of the reference pattern by comparing the first recognition area with the prescribed reference areas,
- having a first selecting means with the aid of which a second reference area can be selected from the reference areas by using the first reference area and one of the relative spatial reference relationships which describes the relative position of the first reference area relative to the second reference area,
- having a second selecting means with the aid of which a second recognition area can be selected from the pattern to be recognized by using the first recognition area and the one relative spatial reference relationship which describes the relative position of the first reference area relative to the second reference area,
- having a recognition means with the aid of which it is possible to determine a matching of the second recognition area with the second selected reference area.

2. Pattern recognition system according to Claim 1,
- in which the pattern to be recognized is recognized as the prescribed reference pattern if the matching overshoots a prescribable threshold; otherwise the pattern to be recognized is not recognized as the reference pattern.

3. Computer-aided determination of a matching between a reference area from a reference pattern and a recognition area from a pattern to be recognized, the reference pattern describing reference areas and relative spatial reference relationships which respectively describe relative spatial positions between the reference areas, having the following steps:
- selecting a first recognition area from the pattern to be recognized,
- determining a first reference area from the reference areas by comparing the first recognition area with the prescribed reference areas,
- determining a second reference area from the reference areas by using the first reference area and one of the relative spatial reference relationships which describes the relative position of the first reference area relative to the second reference area,
- determining a second recognition area from the pattern to be recognized by using the first recognition area and the one relative spatial reference relationship which describes the relative position of the first reference area relative to the second reference area, and
- determining the matching of the second recognition area with the second selected reference area.

4. Method according to Claim 3, used for pattern recognition in such a way that the pattern to be recognized is recognized as the reference pattern when a first prescribed measure of matching is achieved, and otherwise the pattern to be recognized is not recognized as the reference pattern.

5. Method according to Claim 4, in which in the event of non-recognition a further second reference area is determined by using the first reference area and a further one of the relative spatial reference relationships which describes the relative position of the first reference area relative to the further second reference area, and the method according to Claim 4 is carried out with the aid of this further second reference area.

6. Method according to Claim 4, in which the method according to Claim 5 is carried out iteratively until the pattern to be recognized is recognized as the reference pattern or a second prescribed measure of matching is undershot.

7. Method according to one of Claims 3 to 6, in which the second reference area is formulated as a hypothesis for a presumed second recognition area which is verified or rejected by the matching.

8. Method according to Claim 7, in which the hypothesis is generated by using an artificial neural network (8).

9. Method according to one of Claims 3 to 8, in which the pattern to be recognized describes an object to be manipulated by a robot.

10. Method according to one of Claims 3 to 8, in which the pattern to be recognized is an image, generated by an imaging system, of a clinical picture.

## Revendications

1. Système de reconnaissance de formes assisté par ordinateur pour établir une concordance entre une zone de reconnaissance d'une forme à reconnaître et une zone de référence d'une forme de référence, comprenant
- un moyen de mise en mémoire, dans lequel sont mises en mémoire des zones de référence prédéterminées d'une forme de référence prédéterminée et des rapports spatiaux relatifs de référence prédéterminés décrivant chacun des positions spatiales relatives entre deux des zones de référence prédéterminées,
- un moyen de sélection permettant de sélectionner une première zone de reconnaissance d'une forme à reconnaître,
- un moyen de comparaison permettant de sélectionner une première zone de référence parmi les zones de référence de la forme de référence par comparaison entre la première zone de reconnaissance et les zones de référence prédéterminées,
- un premier moyen de sélection permettant de sélectionner une deuxième zone de référence parmi les zones de référence en utilisant la première zone de référence et l'un des rapports spatiaux relatifs de référence, lequel décrit la position relative de la première zone de référence par rapport à la deuxième zone de référence,
- un deuxième moyen de sélection permettant de sélectionner une deuxième zone de reconnaissance de la forme à reconnaître en utilisant la première zone de reconnaissance et le rapport spatial relatif de référence, lequel décrit la position relative de la première zone de référence par rapport à la deuxième zone de référence,
- un moyen de reconnaissance permettant d'établir une concordance entre la deuxième zone de reconnaissance et la deuxième zone de référence sélectionnée.

2. Système de reconnaissance de formes selon la revendication 1, dans lequel la forme à reconnaître est reconnue comme étant la forme de référence prédéterminée lorsque la concordance dépasse un seuil prédéterminable et qu'autrement la forme à reconnaître n'est pas reconnue comme étant ladite forme de référence.

3. Établissement, assisté par ordinateur, d'une concordance entre une zone de référence d'une forme de référence et une zone de reconnaissance d'une forme à reconnaître, la forme de référence prédéterminant des zones de référence et des rapports spatiaux relatifs de référence qui décrivent chacun des positions spatiales relatives entre lesdites zones de référence, cette opération présentant les étapes suivantes:
- sélection d'une première zone de reconnaissance de la forme à reconnaître,
- détermination d'une première zone de référence parmi les zones de référence par comparaison entre la première zone de reconnaissance et les zones de référence prédéterminées,
- détermination d'une deuxième zone de référence parmi les zones de référence en utilisant la première zone de référence et l'un des rapports spatiaux relatifs de référence décrivant la position relative de la première zone de référence par rapport à la deuxième zone de référence,
- détermination d'une deuxième zone de reconnaissance de la forme à reconnaître en utilisant la première zone de reconnaissance et le rapport spatial relatif de référence décrivant la position relative de la première zone de référence par rapport à la deuxième zone de référence,
- détermination de la concordance entre la deuxième zone de reconnaissance et la deuxième zone de référence sélectionnée.

4. Procédé selon la revendication 3, utilisé pour la reconnaissance de formes de manière telle que la forme à reconnaître est reconnue comme étant la forme de référence lorsqu'un premier degré de concordance prédéterminé est atteint et qu'autrement la forme à reconnaître n'est pas reconnue comme étant ladite forme de référence.

5. Procédé selon la revendication 4, dans lequel en cas de non-reconnaissance une deuxième autre zone de référence est déterminée en utilisant la première zone de référence et un autre des rapports spatiaux relatifs de référence décrivant la position relative de la première zone de référence par rapport à la deuxième autre zone de référence et dans lequel le procédé selon la revendication 4 est exécuté compte tenu de cette deuxième autre zone de référence.

6. Procédé selon la revendication 4, dans lequel le procédé selon la revendication 5 est exécuté itérativement jusqu'à ce que la forme à reconnaître soit reconnue comme étant la forme de référence ou jusqu'à ce qu'un deuxième degré de concordance prédéterminé ne soit plus atteint.

7. Procédé selon l'une des revendications 3 à 6, dans lequel la deuxième zoné de référence est formulée sous la forme d'une hypothèse pour une deuxième zone de reconnaissance présumée, cette hypothèse étant vérifiée en cas de concordance ou rejetée.

8. Procédé selon la revendication 7, dans lequel l'hypothèse est générée en utilisant un réseau neuronal artificiel (8).

9. Procédé selon l'une des revendication 3 à 8, dans lequel la forme à reconnaître décrit un objet censé être manipulé par un robot.

10. Procédé selon l'une des revendications 3 à 8, dans lequel la forme à reconnaître est la représentation d'une pathologie générée par un système d'imagerie.
